# EUROPEAN PATENT APPLICATION

(11) **EP 2 650 325 A1**
(43) Date of publication of application: **16.10.2013**
(21) Application number: 12163596.5
(22) Date of filing: 10.04.2012
(51) Int. Cl.: C08K 3/04

(54) **Polymer mixture, rubber mixture comprising the polymer mixture and process for preparing the rubber mixture**

(71) Applicant: ContiTech AG, 30165 Hannover (DE); Nanocyl S.A., 5060 Sambreville (BE)
(72) Inventor: Sostmann, Stefan, 30855 Langenhagen (DE); Borvitz, Dieter, 30519 Hannover (DE); Claes, Michael, 4624 Romsee (BE); Bonduel, Daniel, 7060 Horrues (BE); Dewaghe, Celine, 6110 Montigny-Le-Tilleul (BE)
(74) Representative: Preusser, Andrea

(57) **Abstract**

The invention relates to a polymer mixture which consists of at least one liquid polymer having an average molecular weight of between 500 and 50 000 g/mol and carbon nanotubes, and to a rubber mixture which comprises the stated polymer mixture. The invention further relates to a process for preparing a rubber mixture, in which in a first process step at least one liquid polymer having an average molecular weight of between 500 and 50 000 g/mol is mixed with carbon nanotubes.

## Description

The invention relates to a polymer mixture, to a rubber mixture which comprises the polymer mixture and to a process for preparing this rubber mixture.

The use of carbon nanotubes in rubber articles, such as pneumatic tyres for vehicles, for example, has been known for some considerable time and is described in DE 10 2007 044 0231 A1 or else in DE 20 2007 056 689 A1, for example.

Carbon nanotubes (abbreviated to CNTs) show significant potentials in relation to the generation and/or influencing of certain product properties. Thus, even with only small amounts, for example, it is possible to generate or optimize conductivities and other fundamental physical characteristics of materials.

A problem, however, is the handling or processing of the carbon nanotubes. As a pure substance, they possess a very low packing density, and the low particle size, in the nanometre range, results in health hazards particularly if the corresponding dusts are inhaled. In order to improve handling and to reduce the health hazards, the carbon nanotubes are mixed with various substances before being processed further, in other words before being used in the end product. For example, EP 0 692 136 B2 discloses the mixing of carbon nanotubes with various resins, while WO 03/050332 A1 disperses carbon nanotubes in different aqueous solutions with the aid of various surface-active substances. US 2010/0201023 A1, in turn, discloses the mixing of the carbon nanotubes with elastomer powder to produce what is called a prebatch. All of the measures stated are unsatisfactory in solving the problem of processing and the health-related aspect. Dispersion in aqueous solution, in particular, is unsuitable for the majority of rubber applications, owing to the water fraction that is then present in the rubber mixture - in other words, generally speaking, aqueous dispersion is incompatible for the stated applications. A prebatch with elastomer powder can still be inhaled and cause health problems. Mixing with resins and other aids to incorporation is likewise critical, since these resins and other aids can generally be filled with CNTs only to fractions of around 20%. As a result, the mixtures include relatively large quantities of adjuvants, which adversely affect the properties of the mixture.

In view of the stated prior art, it is an object of the present invention to provide a possibility for effective processing of carbon nanotubes without health risks.

This object is achieved by mixing the carbon nanotubes with at least one liquid polymer having an average molecular weight of between 500 and 50 000 g/mol - this means that there is a polymer mixture comprising at least one liquid polymer having an average molecular weight of between 500 and 50 000 g/mol and carbon nanotubes.

A further object of the present invention is to provide a rubber mixture which comprises carbon nanotubes and where the carbon nanotubes can be processed effectively and incorporated into the rubber mixture without compatibility problems and without a health burden.

This object is achieved by the rubber mixture comprising a polymer mixture which consists of at least one liquid polymer having an average molecular weight of between 500 and 50 000 g/mol and carbon nanotubes.

Surprisingly it has been found that carbon nanotubes can be dispersed effectively in liquid polymers and that as a result the processing properties of the carbon nanotubes can be significantly optimized. At the same time there are no longer any dusts posing a hazard to health. The effective dispersion of the carbon nanotubes is evident particularly in the low viscosities of the liquid polymers, meaning that processing techniques of the kind known from the processing of liquids can be employed for the dispersing operation. As a result, the distribution of the carbon nanotubes in the liquid polymer is good.

Furthermore, it is possible and sensible to tailor the liquid polymer used to the formula of the rubber mixture. The majority of technically customary solid polymers with a relatively high molecular weight are also obtainable in a short-chain variant with a lower molecular weight, which can be used for the polymer mixture of the invention. This leads to a further facilitation when the polymer mixture consisting of carbon nanotubes and liquid polymer is mixed into the rubber mixture, since in this case the compatibility is good and there is no need for any additional dispersing aids. During the vulcanization of the rubber mixture, the liquid polymer is crosslinked as well, and even in relatively large quantities has virtually no modifying effect on the physical properties of the vulcanized rubber mixture or of the vulcanized end product.

The liquid polymer in which the CNTs are present is preferably already a constituent of the rubber mixture or is at least of the same dynamic type as that already present in the rubber mixture, and so here there are no detractions from the physical properties.

Liquid polymers are all polymers whose average molecular weight is between 500 and 50 000 g/mol. The average molecular weight in this case is determined by means of gel permeation chromatography (GPC).

As already described above, the majority of technically relevant polymers are also obtainable in a liquid variant and can be used for the present invention. It has emerged as being particularly suitable to use liquid polymers selected from the group consisting of synthetic polyisoprene, natural polyisoprene, butadiene rubber, styrene-butadiene rubber, solution-polymerized styrene-butadiene rubber, emulsion-polymerized styrene-butadiene rubber, nitrile rubber, fluoro rubber, EPDM rubber, EPM rubber and chloroprene rubber. The liquid polymers can each be used individually or in a blend of at least two liquid polymers.

Suitable carbon nanotubes are all known carbon nanotubes, and can therefore be used for the present invention. The carbon nanotubes may therefore be single-walled or multi-walled. Multi-walled carbon nanotubes may *inter alia* be prepared as described in patent application WO 2006079186. The diameter of the carbon nanotubes is usually between 2 to 200 nm, preferably between 2 to 75 nm, and most preferably between 2 to 20 nm. The length of the carbon nanotubes is between 0.1 to 50 µm.

Besides the polymer mixture, which consists of at least one liquid polymer having an average molecular weight of between 500 and 50 000 g/mol and carbon nanotubes, both as described above, the rubber mixture of the invention further comprises at least one solid polar or apolar rubber and at least one filler and further additives.

Solid rubbers are all rubbers whose average molecular weight as determined by means of GPC lies between 100 000 and 5 000 000 g /mol. The polar or apolar rubber here is selected from the group consisting of natural polyisoprene and/or synthetic polyisoprene and/or butadiene rubber and/or styrene-butadiene rubber and/or solution-polymerized styrene-butadiene rubber and/or emulsion-polymerized styrene-butadiene rubber and/or liquid rubbers and/or halobutyl rubber and/or polynorbornene and/or isoprene-isobutylene copolymer and/or ethylene-propylene-diene rubber and/or nitrile rubber and/or chloroprene rubber and/or acrylate rubber and/or fluoro rubber and/or silicone rubber and/or polysulphide rubber and/or epichlorohydrin rubber and/or styrene-isoprene-butadiene terpolymer and/or hydrogenated acrylonitrile-butadiene rubber and/or isoprene-butadiene copolymer and/or hydrogenated styrene-butadiene rubber.

In particular, nitrile rubber, hydrogenated acrylonitrile-butadiene rubber, chloroprene rubber, butyl rubber, halobutyl rubber, fluoro rubber or ethylene-propylene-diene rubber are employed in the production of technical rubber articles, such as belts, straps and tubes.

The polar or apolar rubber may additionally have been modified with hydroxyl groups and/or epoxy groups and/or siloxane groups and/or amino groups and/or aminosiloxane and/or carboxyl groups and/or phthalocyanine groups. Also contemplated, however, are further modifications, known to the skilled person, and also referred to as functionalizations.

The rubber mixture may further comprise at least one filler, which is preferably a light and/or dark filler. The total amount of filler may therefore consist only of light or dark filler or of a combination of light and dark fillers. It is preferred if the light filler is silica, preferably precipitated silica.

The silicas used in the rubber industry are generally precipitated silicas, which are characterized in particular according to their surface area. For characterization in this context the nitrogen surface area (BET) in accordance with DIN 66131 and DIN 66132 is stated as a measure of the inner and outer filler surface area, in m²/g, and the CTAB surface area in accordance with ASTM D 3765 is stated as a measure of the outer surface area, which is often regarded as the rubber-active surface area, in m²/g.

It is preferred to use silicas having a nitrogen surface area of greater than or equal to 100 m²/g, preferably between 120 and 300 m²/g, more preferably between 140 and 250 m²/g, and a CTAB surface area of between 100 and 250 m²/g, preferably between 120 and 230 m²/g and more preferably between 140 and 200 m²/g.

The dark filler is preferably carbon black. In one particularly preferred embodiment the carbon black has an iodine number, in accordance with ASTM D 1510, which is also referred to as the iodine absorption number, of greater than or equal to 75 g/kg, and a DBP number of greater than or equal to 80 cm³/100 g. The DBP number in accordance with ASTM D 2414 defines the specific absorption volume of a carbon black or of a light filler by means of dibutyl phthalate.

It is also possible, however, to use further fillers, such as aluminium oxide, talc or kaolin, for example.

In the rubber mixture there may also be at least one plasticizer. This plasticizer is selected from the group consisting of mineral oils and/or synthetic plasticizers and/or fatty acids and/or fatty acid derivatives and/or resins and/or factices and/or glycerides and/or terpenes and/or liquid polymers having a molecular weight M_{w} between 100 and 10 000 g/mol and/or biomass-to-liquid oils (BTL oils).

In addition the rubber mixture also comprises further additives.

Further additives encompass essentially the crosslinking system (crosslinker(s), sulphur donors and/or elemental sulphur, accelerators and retardants), antiozonants, ageing inhibitors, mastication aids and other activators.

It is a further object of the invention to provide a process for preparing a rubber mixture comprising carbon nanotubes, the said process being distinguished by effective dispersion of the carbon nanotubes and by good processing properties of the carbon nanotubes, and featuring at least a significantly reduced amount of carbon nanotube dusts which pose a health hazard, or none.

This object is achieved by means of a process in which, in a first process step, at least one liquid polymer having an average molecular weight of between 500 and 50 000 g/mol is combined with carbon nanotubes to give a polymer mixture. In at least one further process step, the polymer mixture is added to a further solid polar or apolar rubber and to at least one filler and to further additives.

This means that the polymer mixture consisting of liquid polymer and carbon nanotubes is added to the further constituents of the rubber mixture either in the second step or in the third step or in a subsequent process step.

The rubber mixture is crosslinked preferably by sulphur crosslinking by means of elemental sulphur, also referred to as free sulphur, and/or by means of sulphur donors, certain sulphur donors being known to be vulcanization accelerators at the same time, or by means of peroxidic crosslinking.

Peroxidic crosslinking finds use more particularly in the case of technical rubber articles, such as tubes, for example.

The rubber mixture is used preferably for producing rubber articles. The rubber article in question may be a tyre, more particularly a pneumatic tyre for vehicles, preferably a tyre for cars, lorries or two-wheeled vehicles, or a technical rubber article. Technical rubber articles for the present purposes are preferably tubes, straps, belts, more particularly conveyor belts, and air springs.

The invention will now be elucidated in more detail with reference to comparative examples and working examples, which are summarized in Tables 1 and 2. The mixtures labelled "I" in these tables are mixtures for inventive rubber articles, whereas the mixtures labelled "C" are comparative mixtures.

The incorporation of the carbon nanotubes inside the rubber matrix is carried out using a liquid phase consisting of a liquid polymer having an average molecular weight of between 500 and 50 000 g/mol. The liquid phase can be a liquid rubber matrix or can also be a liquid additive used in large amount such as processing oil.

Carbon nanotubes are dispersed in the liquid phase by using a three roll mill. Parameters such as gaps between the rolls, speed of the rolls and temperature may be adapted, depending on the liquid polymer and the amount of carbon nanotubes. The number of pass may also vary with the selected liquid polymer and the loading of carbon nanotubes.

A coupling agent may be added during the process to improve the dispersion of carbon nanotubes in the liquid polymer.

The dispersion of carbon nanotubes within the liquid phase may also comprise additional premixed step(s) between the pass to reduce the number of pass on the three roll mill.

### Example 1:

5 g of NC 7000 carbon nanotubes (from Nanocyl) and 95 g of butadiene rubber have been used to prepare the liquid polymer mixture. Carbon nanotubes have been incorporated in the polybutadiene during the first pass, having a gap 1 at 45 µm, a gap 2 at 15 µm with a speed of 200 rpm and a temperature of 20°C. A second pass has been made with a gap 1 at 30 µm, a gap 2 at 1 µm with a speed of 200 rpm and a temperature of 20°C.

A third pass has been made with a gap 1 at 15 µm, a gap 2 at 5 µm with a speed of 200 rpm and a temperature of 20°C. A fourth pass has been made with a gap 1 at 15 µm, a gap 2 at 5 µm with a speed of 200 rpm and a temperature of 20°C.

Comparative and inventive examples collated in Tables 1a and 1b, and 2a and 2b, will now be used for further explanation of the invention. The mixtures characterized by "I" here are mixtures of the invention, whereas the mixtures characterized by "C" are comparative mixtures.

In all of the mixture examples present in the table, the stated quantity figures are parts by weight, which are based on 100 parts by weight of total rubber (phr).

The mixtures were prepared under customary conditions in two stages in a tangential laboratory mixer. All of the mixtures were used to produce test specimens, by vulcanization, and these test specimens were used for determining materials properties typical for the rubber industry. For the above-described tests on test specimens, the test methods employed were as follows:
- Shore A hardness at room temperature to DIN 53 505
- Mooney viscosity to ASTM D1646
- rebound resilience at room temperature to DIN 53 512
- stress values for 50% tensile strain at room temperature to DIN 53 504
- tensile strength at room temperature to DIN 53 504
- elongation at break at room temperature to DIN 53504
- volume and surface resistivity at room temperature to ISO 1853

**Table 1a**

| **Constituents** | **unit** | **C1** | **C2** | **I1** | **I2** |
|---|---|---|---|---|---|
| Polyisoprene^{a} | phr | 40 | 40 | 40 | 40 |
| Butadiene rubber^{b} | phr | 60 | 60 | 60 | 60 |
| Carbon black, N339 | phr | 30 | 30 | 30 | 30 |
| Paraffinic oil | phr | 3 | 3 | 3 | 3 |
| Zincoxide | phr | 3 | 3 | 3 | 3 |
| Stearic acid | phr | 1.5 | 1.5 | 1.5 | 1.5 |
| Aging and ozone protection | phr | 4 | 4 | 4 | 4 |
| CNT^{c} | phr | -- | 5 | -- | -- |
| CNT^{d} | phr | -- | -- | 25 | 25 |
| Accelerator^{e} | phr | 2.5 | 2.5 | 3 | 3 |
| Sulfur | phr | 2 | 2 | 2.5 | 2.5 |

| | | | | | |
|---|---|---|---|---|---|
| ^{a} NR, TSR ^{b} BR, BUNA CB24, Lanxess ^{c} Carbon Nano Tubes, NC7000, Nanocyl SA ^{d} Carbon Nano Tubes, 20M% NC7000 in 80M% liquid BR (Ricon 130), Nanocyl SA ^{e} CBS | | | | | |

**Table 2b**

| **Properties** | **Unit** | **C1** | **C2** | **I1** | **I2** |
|---|---|---|---|---|---|
| Mooney-Viscosity | Mooney | 57.3 | 58.5 | 34.3 | 25.9 |
| Rebound at RT | % | 75.2 | 75 | 74.8 | 72.2 |
| Hardness at RT | ShA | 60 | 58 | 49 | 49 |
| Elongation at Break | % | 249 | 245 | 239 | 262 |
| Tensile Strength | MPa | 7.8 | 7.3 | 4.4 | 5.1 |
| 50% stress value | MPa | 1.33 | 1.25 | 0.88 | 0.92 |
| Volume resistivity | Ohm | 4500000 | 3700000 | 4700 | 410 |
| Surface resistivity | Ohm | 14000000 | 12000000 | 33000 | 3000 |

Table 1b shows the advantage of CNT dissolved in liquid polymer compared to "regular" CNT (see C2). The higher softness of the mixture caused by the additional liquid polymer can be adjusted via cross linking agents and amount of filler. I1 is mixed in a classical way that is the mixture is prepared in an internal mixer. I2 shows even better resistivity values and is mixed on a mill.

**Table 2a**

| **Constituents** | **unit** | **C3** | **C4** | **I3** | **I4** |
|---|---|---|---|---|---|
| Polyisoprene^{a} | phr | 39 | 39 | 39 | 31.2 |
| Butadiene rubber^{b} | phr | 61 | 61 | 61 | 48.80 |
| Carbon black, N550 | phr | 30 | 30 | 30 | 30 |
| Paraffinic oil | phr | 5 | 5 | 5 | 5 |
| Zincoxide | phr | 4 | 4 | 4 | 4 |
| Stearic acid | phr | 2.5 | 2.5 | 2.5 | 2.5 |
| Aging and ozone protection | phr | 9 | 9 | 9 | 9 |
| CNT^{c} | phr | -- | 5 | -- | -- |
| CNT^{d} | phr | -- | -- | 25 | 25 |
| Accelerator^{e} | phr | 0.8 | 0.8 | 0.8 | 0.8 |
| Sulfur | phr | 3.5 | 3.5 | 3.5 | 3.5 |

| | | | | | |
|---|---|---|---|---|---|
| ^{a} NR, TSR ^{b} BR, BUNA CIS 132, Styron ^{c} Carbon Nano Tubes, NC7000, Nanocyl SA ^{d} Carbon Nano Tubes, 20M% NC7000 in 80M% liquid BR (Ricon 130), Nanocyl SA ^{e} CBS | | | | | |

**Table 2b**

| **Properties** | **Unit** | **C3** | **C4** | **I3** | **I4** |
|---|---|---|---|---|---|
| Mooney-Viscosity | Mooney | 35.9 | 34.2 | 18.6 | 18.4 |
| Hardness at RT | ShA | 49 | 47 | 35 | 38 |
| Elongation at Break | % | 591 | 572 | 725 | 718 |
| Tensile Strength | MPa | 14.1 | 13.2 | 10.5 | 12.1 |
| 50% stress value | MPa | 0.76 | 0.73 | 0.44 | 0.48 |
| Volume resistivity | Ohm | 8*10⁹ | 5.3*10⁹ | 1.3*10⁶ | 1.9*10⁵ |
| Surface resistivity | Ohm | 1.6*10⁹ | 1.2*10⁹ | 1.1*10⁷ | 1.5*10⁶ |

Table 2b shows the results of another softer mixture. Even in the softer mixture a good dispersion of the CNT, which are dissolved in liquid polymer, can be seen. The mixture with the "regular" CNT doesn't have a good dispersion of the CNT.

## Claims

1. Polymer mixture **characterized in that** it consists of at least one liquid polymer selected from the group consisting of synthetic polyisoprene, natural polyisoprene, butadiene rubber, styrene-butadiene rubber, solution-polymerized styrene-butadiene rubber, emulsion-polymerized styrene-butadiene rubber, nitrile rubber, fluoro rubber, EPDM rubber, EPM rubber and chloroprene rubber,having an average molecular weight of between 500 and 50 000 g/mol and carbon nanotubes.

2. Rubber mixture **characterized in that** it comprises at least one polymer mixture consisting of at least one liquid polymer having an average molecular weight of between 500 and 50 000 g/mol and carbon nanotubes, and at least one solid polar or apolar rubber and at least one filler and further additives.

3. Process for preparing a rubber mixture, **characterized by** at least the following process steps:
- combining at least one liquid polymer having an average molecular weight of between 500 and 50 000 g/mol with carbon nanotubes to give a polymer mixture in a first process step;
- adding the polymer mixture to at least one further solid polar or apolar rubber and to at least one filler and to further additives in at least one further process step.

4. Use of a rubber mixture according to Claim 2 for producing rubber articles.

5. Use of a rubber mixture according to Claim 4, **characterized in that** the rubber articles are tyres, belts, straps, tubes, air springs, damping units or footwear soles.
